# EUROPEAN PATENT APPLICATION

(11) **EP 3 992 819 A1**
(43) Date of publication of application: **04.05.2022**
(21) Application number: 19935366.5
(22) Date of filing: 25.06.2019
(51) Int. Cl.: G06F 17/00

(54) **METHOD AND APPARATUS FOR GENERATING SIMULATION DIGITAL CERTIFICATE, MINING POOL DIAGNOSIS, MEDIUM, AND PRODUCT**

(71) Applicant: ANTPOOL TECHNOLOGIES LIMITED, Wanchai, Hong Kong (CN)
(72) Inventor: GUO, Xunliao, Haidian District Beijing 100192 (CN); HE, Jing, Hong Kong (CN)
(74) Representative: Goddar, Heinz J.
(86) International application number: PCT/CN2019/092843
(87) International publication number: WO 2020/258045

(57) **Abstract**

The present application relates to a method and an apparatus for simulating digital certificate generation, a method, a module, and a system for diagnosing a mining pool, a storage medium, and a program product. The method for simulating digital certificate generation includes: determining a digital certificate connection protocol based on a digital certificate type; simulating, based on the digital certificate connection protocol, establishing, by a digital certificate generation device, a connection to a mining pool; simulating sending, by the digital certificate generation device, digital certificate generation request information to the mining pool; and receiving feedback information of the mining pool for the digital certificate generation request information.

## Description

### Technical Field

The present application relates to the field of digital certificate processing technologies, and in particular to a method for simulating digital certificate generation, an apparatus for simulating digital certificate generation, a mining pool, a method, a module, and a system for diagnosing a mining pool, a computer-readable storage medium, and a computer program product.

### Background Art

To test the digital certificate processing performance of a mining pool, an available method includes: processing a digital certificate using a hardware digital certificate generation device connected to a mining pool, to test correctness of a mining pool software system. However, due to numerous types of digital certificates and a variety of digital certificate generation devices, it is required to purchase a large number of digital certificate generation devices so that a test covers all possible cases. This results in high costs and cannot allow for customized debugging.

### Summary of the Invention

The present application is intended to solve at least one of the technical problems existing in the prior art. To this end, a first objective of the present application is to propose a method for simulating digital certificate generation. The method can simulate different data interactions between a digital certificate generation device and a mining pool, providing support for diagnosing digital certificate processing performance of the mining pool, and resulting in low costs.

A second objective of the present application is to propose an apparatus for simulating digital certificate generation.

A third objective of the present application is to propose another apparatus for simulating digital certificate generation.

A fourth objective of the present application is to propose another method for simulating digital certificate generation.

A fifth objective of the present application is to propose a method for diagnosing a mining pool.

A sixth objective of the present application is to propose a module for diagnosing a mining pool.

A seventh objective of the present application is to propose a system for diagnosing a mining pool.

An eighth objective of the present application is to propose a computer-readable storage medium.

A ninth objective of the present application is to propose a computer program product.

To achieve the foregoing objectives, a method for simulating digital certificate generation according to an embodiment of a first aspect of the present application includes: determining a digital certificate connection protocol based on a digital certificate type; simulating, based on the digital certificate connection protocol, establishing, by a digital certificate processing device, a connection to a mining pool; simulating sending, by the digital certificate generation device, digital certificate generation request information to the mining pool; and receiving feedback information of the mining pool for the digital certificate generation request information.

According to the method for simulating digital certificate generation in this embodiment of the present application, a connection protocol is determined based on a digital certificate type, and connections between different digital certificate generation devices and a mining pool can be simulated based on different connection protocols, providing support for research and development of new types of digital certificates and the mining pool; and various data interaction behaviors between the digital certificate generation devices and the mining pool can be simulated, such as a normal behavior and an anomalous behavior, providing support for diagnosing performance of the mining pool, and resulting in low costs.

In some embodiments, the simulating sending, by the digital certificate generation device, digital certificate generation request information to the mining pool includes: simulating sending, by the digital certificate generation device, normal digital certificate generation request information to the mining pool.

In some embodiments, the simulating sending, by the digital certificate generation device, normal digital certificate generation request information to the mining pool includes:
sending subscription information and authentication information to the mining pool; and
obtaining a random hash value based on a received digital certificate generation task, and sending the random hash value to the mining pool based on the digital certificate type; and
the receiving feedback information of the mining pool for the request information includes:
   receiving connection acknowledgment information fed back by the mining pool based on the subscription information; and
   when it is determined, based on the authentication information, that it is authorized to generate a digital certificate, receiving the digital certificate generation task delivered by the mining pool.

In some embodiments, the simulating sending, by the digital certificate generation device, digital certificate generation request information to the mining pool includes: simulating sending, by the digital certificate generation device, anomalous digital certificate generation request information to the mining pool.

In some embodiments, the simulating sending, by the digital certificate generation device, anomalous digital certificate generation request information to the mining pool includes:
simulating obtaining, by the digital certificate generation device, a first random hash value based on the digital certificate generation task, and sending the first random hash value to the mining pool; and transforming the first random hash value to obtain a second random hash value, and sending the second random hash value to the mining pool;
or obtaining a random hash value after the digital certificate generation task is received, and reporting the random hash value to the mining pool even when the random hash value does not meet a difficulty of the digital certificate generation task.

In some embodiments, the simulating, based on the digital certificate connection protocol, establishing, by a digital certificate generation device, a connection to a mining pool includes: simulating, in a multi-process and/or multi-thread manner, establishing, by a plurality of digital certificate generation devices, connections to the mining pool, so that connections between massive digital certificate generation devices and the mining pool can be simulated, providing support for a stress test of the mining pool.

To solve the foregoing problems, an apparatus for simulating digital certificate generation according to an embodiment of a second aspect of the present application includes: a determination module configured to determine a digital certificate connection protocol based on a digital certificate type; a first connection module configured to simulate, based on the digital certificate connection protocol, establishing, by a digital certificate generation device, a connection to a mining pool; an information sending module configured to simulate sending, by the digital certificate generation device, digital certificate generation request information to the mining pool; and an information receiving module configured to receive feedback information of the mining pool for the digital certificate generation request information.

According to the apparatus for simulating digital certificate generation in this embodiment of the present application, the determination module may be used to determine the digital certificate connection protocol based on the digital certificate type, and the connection to the mining pool may be established. Therefore, this is not limited by the digital certificate type. In other words, connections between different types of digital certificate generation devices and the mining pool can be simulated. In addition, the information sending module and the information receiving module may be used to simulate data interaction between the digital certificate generation device and the mining pool. In this way, support is provided for diagnosing performance of the mining pool, a more comprehensive diagnosis of performance of the mining pool is performed, and costs are low.

In some embodiments, when sending the digital certificate generation request information, the information sending module is further configured to simulate sending, by the digital certificate generation device, normal digital certificate generation request information to the mining pool.

In some embodiments, the information sending module includes:
a subscription information sending unit configured to send subscription information to the mining pool;
an authentication information sending unit configured to send authentication information to the mining pool; and
a first hash sending unit configured to obtain a random hash value based on the digital certificate generation task, and send the random hash value to the mining pool based on the digital certificate type; and
the information receiving module includes:
   a subscription acknowledgment receiving unit configured to receive connection acknowledgment information of the mining pool based on the subscription information; and
   a task receiving unit configured to: when it is authorized to generate a digital certificate, receive the digital certificate generation task delivered by the mining pool.

In some embodiments, when sending the digital certificate generation request information, the information sending module is further configured to simulate sending, by the digital certificate generation device, anomalous digital certificate generation request information to the mining pool.

In some embodiments, the information sending module includes:
a second hash sending unit configured to simulate obtaining, by the digital certificate generation device, a first random hash value based on the digital certificate generation task, and send the first random hash value to the mining pool; and
a third hash sending unit configured to transform the first random hash value to obtain a second random hash value, and send the second random hash value to the mining pool;
or when simulating sending, by the digital certificate generation device, the anomalous digital certificate generation request information to the mining pool, the information sending module is further configured to obtain a random hash value after the digital certificate generation task is received, and report the random hash value to the mining pool even when the random hash value does not meet a difficulty of the digital certificate generation task.

In some embodiments, when simulating establishing, by the digital certificate generation device, a connection to the mining pool, the first connection module is further configured to simulate, in a multi-process and/or multi-thread manner, establishing, by a plurality of digital certificate generation devices, connections to the mining pool, so that connections between massive digital certificate generation devices and the mining pool can be simulated, providing support for a stress test of the mining pool.

To solve the foregoing problems, an apparatus for simulating digital certificate generation according to an embodiment of a third aspect of the present application includes: at least one processor; and a memory communicatively connected to the at least one processor, where the memory stores instructions executable by the at least one processor, and when executed by the at least one processor, the instructions cause the at least one processor to perform the method for simulating digital certificate generation.

To solve the foregoing problems, a method for simulating digital certificate generation according to an embodiment of a fourth aspect of the present application includes: establishing a connection to the apparatus for simulating digital certificate generation; receiving digital certificate generation request information sent by the apparatus for simulating digital certificate generation; generating feedback information based on the digital certificate generation request information; and sending the feedback information to the apparatus for simulating digital certificate generation.

According to the method for simulating digital certificate generation in this embodiment of the present application, the mining pool can implement, based on the digital certificate generation request information of the apparatus for simulating digital certificate generation, data interaction with the apparatus for simulating digital certificate generation, and simulate generation processes of different types of digital certificates, providing support for diagnosing performance of the mining pool without relying on various types of physical digital certificate generation devices, and resulting in low costs. In addition, based on diagnostic needs, customized debugging can be performed on the apparatus for simulating digital certificate generation.

In some embodiments, the digital certificate generation request information includes normal digital certificate generation request information, and the generating feedback information based on the digital certificate generation request information includes:
receiving subscription information of the apparatus for simulating digital certificate generation, and generating connection acknowledgment information based on the subscription information;
receiving authentication information of the apparatus for simulating digital certificate generation, and performing authentication based on the authentication information; and
when it is determined that the apparatus for simulating digital certificate generation is authorized to generate a digital certificate, generating a digital certificate generation task.

In some embodiments, the digital certificate generation request information includes anomalous digital certificate generation request information, and the method further includes: performing anomaly verification based on the digital certificate generation request information.

In some embodiments, the performing anomaly verification based on the digital certificate generation request information includes:
receiving a random hash value sent by the apparatus for simulating digital certificate generation;
verifying whether the random hash value is duplicate, and
if the random hash value is duplicate, discarding one of the duplicate random hash values; and
determining whether the random hash value meets a difficulty of a digital certificate generation task, and
if the random hash value does not meet the difficulty of the digital certificate generation task, discarding the random hash value.

To solve the foregoing problems, a method for diagnosing a mining pool according to an embodiment of a fifth aspect of the present application includes: obtaining feedback information generated by a mining pool based on digital certificate generation request information, where the digital certificate generation request information is sent by the apparatus for simulating digital certificate generation; and diagnosing, based on the feedback information, whether the mining pool is anomalous.

According to the method for diagnosing a mining pool in this embodiment of the present application, the feedback information of the mining pool is obtained based on a connection and data interaction between the apparatus for simulating digital certificate generation and the mining pool, and the mining pool is diagnosed based on the feedback information. Based on diagnostic needs, customized debugging can be performed on the apparatus for simulating digital certificate generation, implementing a diagnosis of various performances of the mining pool without relying on a physical digital certificate generation device, and resulting in low costs.

In some embodiments, the feedback information includes at least one of connection acknowledgment information and a digital certificate generation task, and the diagnosing, based on the feedback information, whether the mining pool is anomalous includes at least one of the following:
diagnosing, based on the connection acknowledgment information, whether a connection between the mining pool and the apparatus for simulating digital certificate generation is normal; and
diagnosing, based on the digital certificate generation task, whether authentication performed by the mining pool on the apparatus for simulating digital certificate generation is normal.

In some embodiments, the method further includes at least one of the following: diagnosing, based on the work, whether a work algorithm of the mining pool is normal, where the work is calculated by the mining pool based on a received random hash value and a computational amount algorithm of a corresponding digital certificate type; and diagnosing, based on the work revenue, whether allocation of the work revenue by the mining pool is correct, where the work revenue is allocated by the mining pool based on a work.

In some embodiments, the method further includes: obtaining verification information of the mining pool for the digital certificate generation request information; and diagnosing, based on the verification information, whether the mining pool is anomalous.

In some embodiments, the verification information includes at least one of duplicate verification information for a received random hash value and difficulty verification information for the random hash value, and the diagnosing, based on the verification information, whether the mining pool is anomalous includes at least one of the following:
when it is verified that the received random hash value is duplicate, but the random hash value is still used to calculate a work, diagnosing the mining pool as anomalous; or
when it is verified that the received random hash value does not meet a difficulty of a corresponding digital certificate generation task, but the random hash value is still used to calculate a work, diagnosing the mining pool as anomalous.

To solve the foregoing problems, a module for diagnosing a mining pool according to an embodiment of a sixth aspect of the present application includes: a first obtaining unit configured to obtain feedback information generated by a mining pool based on digital certificate generation request information, where the digital certificate generation request information is sent by the apparatus for simulating digital certificate generation; and a first diagnosis unit configured to diagnose, based on the feedback information, whether the mining pool is anomalous.

According to the module for diagnosing a mining pool in this embodiment of the present application, the feedback information of the mining pool is obtained based on a connection and data interaction between the apparatus for simulating digital certificate generation and the mining pool, and the mining pool is diagnosed based on the feedback information. Based on diagnostic needs, customized debugging can be performed on the apparatus for simulating digital certificate generation, implementing a diagnosis of various performances of the mining pool without relying on a physical digital certificate generation device, and resulting in low costs.

In some embodiments, the feedback information includes at least one of connection acknowledgment information and a digital certificate generation task, and when diagnosing whether the mining pool is anomalous, the first diagnosis unit is configured to perform at least one of the following:
diagnosing, based on the connection acknowledgment information, whether a connection between the mining pool and the apparatus for simulating digital certificate generation is normal; and diagnosing, based on the digital certificate generation task, whether authentication performed by the mining pool on the apparatus for simulating digital certificate generation is normal.

In some embodiments, the module further includes: a second diagnosis unit configured to diagnose, based on the work, whether a work algorithm of the mining pool is normal, where the work is calculated by the mining pool based on a received random hash value and a computational amount algorithm of a corresponding digital certificate type; and a third diagnosis unit diagnosing, based on work revenue, whether allocation of the work revenue by the mining pool is correct, where the work revenue is allocated by the mining pool based on a work.

In some embodiments, the module for diagnosing a mining pool further includes: a second obtaining module configured to obtain verification information of the mining pool for the digital certificate generation request information; and a fourth diagnosis unit configured to diagnose, based on the verification information, whether the mining pool is anomalous.

In some embodiments, the verification information includes at least one of duplicate verification information for a received random hash value and difficulty verification information for the random hash value, and when diagnosing whether the mining pool is anomalous, the fourth diagnosis unit is configured to perform at least one of the following:
when it is verified that the received random hash value is duplicate, but the random hash value is still used to calculate a work, diagnosing the mining pool as anomalous; or
when it is verified that the received random hash value does not meet a difficulty of a corresponding digital certificate generation task, but the random hash value is still used to calculate a work, diagnosing the mining pool as anomalous.

To solve the foregoing problems, a system for diagnosing a mining pool according to an embodiment of a seventh aspect of the present application includes: a mining pool; the apparatus for simulating digital certificate generation; and the module for diagnosing a mining pool.

According to the system for diagnosing a mining pool in this embodiment of the present application, data interaction is simulated based on the apparatus for simulating digital certificate generation and the module for diagnosing a mining pool, to diagnose the mining pool, and costs are low. In addition, based on diagnostic needs, customized debugging can be performed on the apparatus for simulating digital certificate generation, which is more flexible.

A computer-readable storage medium according to an embodiment of an eighth aspect of the present application stores computer-executable instructions, and the computer-executable instructions are configured to perform the method for simulating digital certificate generation, or perform the method for diagnosing a mining pool.

A computer program product according to an embodiment of a ninth aspect of the present application includes a computer program stored on a computer-readable storage medium, where the computer program includes program instructions, and when executed by a computer, the program instructions cause the computer to perform the method for simulating digital certificate generation, or cause the computer to perform the method for diagnosing a mining pool.

Additional aspects and advantages of this application will be set forth in part in the following description, and in part will be apparent from the following description, or may be learned by practice of this application.

### Brief Description of the Drawings

One or more embodiments are exemplarily illustrated by means of corresponding accompanying drawings thereof, the exemplary illustration and accompanying drawings do not constitute a limitation on the embodiments. Elements having the same reference numerals in the accompanying drawings represent similar elements, and the accompanying drawings do not constitute a limitation in terms of scale, in which:
FIG. 1 is a flowchart of a method for simulating digital certificate generation according to an embodiment of the present application;
FIG. 2 is a block diagram of an apparatus for simulating digital certificate generation according to an embodiment of the present application;
FIG. 3 is a block diagram of an apparatus for simulating digital certificate generation according to another embodiment of the present application;
FIG. 4 is a block diagram of an apparatus for simulating digital certificate generation according to still another embodiment of the present application;
FIG. 5 is a block diagram of an apparatus for simulating digital certificate generation according to yet another embodiment of the present application;
FIG. 6 is a block diagram of an apparatus for simulating digital certificate generation according to still yet another embodiment of the present application;
FIG. 7 is a flowchart of an apparatus for simulating digital certificate generation according to another embodiment of the present application;
FIG. 8 is a flowchart of a method for diagnosing a mining pool according to an embodiment of the present application;
FIG. 9 is a block diagram of a module for diagnosing a mining pool according to an embodiment of the present application;
FIG. 10 is a block diagram of a module for diagnosing a mining pool according to another embodiment of the present application; and
FIG. 11 is a block diagram of a system for diagnosing a mining pool according to an embodiment of the present application.

### Detailed Description of Embodiments

To understand features and technical contents of embodiments of the present application in more detail, the implementation of the embodiments of the present application will be described below in detail with reference to the accompanying drawings, which are for reference and illustration only, and are not intended to limit the embodiments of the present application. In the following technical description, for convenience of explanation, numerous details are set forth to provide a thorough understanding of the disclosed embodiments. However, one or more embodiments can still be implemented without these details. In other cases, to simplify the drawings, well-known structures and apparatuses may be shown in a simplified manner.

A method for simulating digital certificate generation according to an embodiment of a first aspect of the present application is described below with reference to the accompanying drawings.

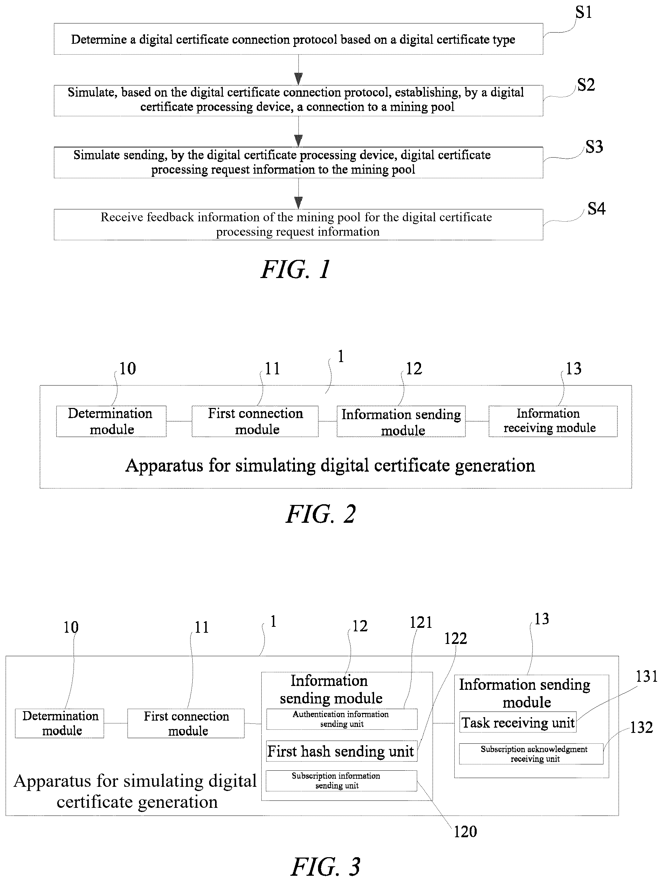

FIG. 1 is a method for simulating digital certificate generation according to an embodiment of the present application. As shown in FIG. 1, the method for simulating digital certificate generation in this embodiment of the present application includes steps S1, S2, S3, and S4:
step S1: determining a digital certificate connection protocol based on a digital certificate type;
step S2: simulating, based on the digital certificate connection protocol, establishing, by a digital certificate generation device, a connection to a mining pool;
step S3: simulating sending, by the digital certificate generation device, digital certificate generation request information to the mining pool; and
step S4: receiving feedback information of the mining pool for the digital certificate generation request information.

Specifically, due to numerous types of digital certificates, such as an encrypted digital certificate based on a SHA256 algorithm, an encrypted digital certificate based on an Ethash algorithm, and an encrypted digital certificate based on a Scrypt algorithm, there are also differences in protocols for a connection between a digital certificate generation device and a mining pool. During a diagnosis of the mining pool, it is required to purchase a large number of digital certificate generation devices so that performance of the mining pool is diagnosed comprehensively as possible for different types of digital certificates. This results in high costs, and the digital certificate generation devices cannot allow for customized debugging.

In this embodiment of the present application, the digital certificate connection protocol may be determined based on the digital certificate type, and the connection to the mining pool may be established. Therefore, this is not limited by the digital certificate type. In other words, connections between different types of digital certificate generation devices and the mining pool can be simulated. Even for a new type of digital certificate, a connection of a digital certificate generation device can be simulated, and interaction behaviors between the digital certificate generation device and the mining pool, for example, sending digital certificate generation request information to the mining pool and receiving corresponding feedback from the mining pool, can be simulated, that is, data interaction between the digital certificate generation device and the mining pool can be simulated. Therefore, this embodiment of the present application is equivalent to simulating digital certificate generation based on a simulation apparatus of the digital certificate generation device. In this way, a more comprehensive diagnosis of performance of the mining pool is performed without requiring a large number of physical digital certificate generation devices, and costs are low. In addition, a behavior of simulating the digital certificate generation device can be debugged based on diagnostic needs, implementing customized debugging.

For example, a connection between a physical digital certificate generation device and the mining pool is established based on an open source stratun-rpc protocol, which is a self-defined protocol based on the Hypertext Transfer Protocol (HTTP). For each type of digital certificate, protocol message details thereof are slightly different. In the method in this embodiment of the present application, a program framework of the digital certificate generation device may be written on a computer terminal by means of a network programming module of a programming language such as Python to implement a state machine mode, implement functions of sending and receiving HTTP messages, simulate interaction between a stratum-rpc protocol of a target type of digital certificate and the mining pool, and simulate interaction behaviors of the physical digital certificate generation device, for example, a series of behaviors and corresponding states such as establishing a connection, authenticating, obtaining a digital certificate generation task, and submitting a share. In other words, a simulation apparatus for simulating digital certificate generation is provided. Detailed specifications for stratum-rpc messages are defined in respective white papers of various types of digital certificates, and a sending procedure and content of messages of the digital certificate generation device can be simulated based on definitions in the white papers of the corresponding digital certificates. In addition, a variety of connection protocols may be defined based on diagnostic needs of the mining pool and the white papers of the various types of digital certificates, and a simulation program may be set by means of the network programming module to implement customized debugging. Therefore, interaction between the digital certificate generation device and the mining pool for different types of digital certificates can be simulated, thereby providing support for diagnosing performance of the mining pool with low costs, and promoting research and development of the mining pool and other types of digital certificate derivative products.

In an embodiment, sending, by the digital certificate generation device, normal digital certificate generation request information to the mining pool may be simulated to assist in diagnosing whether the performance of the mining pool is good. For example, the normal digital certificate generation request information may include behaviors such as establishing a connection, authenticating, obtaining a digital certificate generation task, and submitting a share.

In some embodiments, simulating sending, by the digital certificate generation device, the normal digital certificate generation request information to the mining pool and interacting with the mining pool may include the following: Subscription information and authentication information are sent to the mining pool. After receiving the subscription information, the mining pool may feed back connection acknowledgment information. The apparatus for simulating digital certificate generation (hereinafter referred to as simulation apparatus) may establish a connection to the mining pool after receiving the connection acknowledgment information. After receiving the authentication information, the mining pool performs authentication on the simulation apparatus that sends the authentication information, to identify whether the simulation apparatus has been registered and is authorized to generate a generation certificate. When determining, based on the authentication information, that the simulation apparatus is authorized to generate a digital certificate, the mining pool sends a digital certificate generation task to the simulation apparatus, and the simulation apparatus obtains a random hash value based on the received digital certificate generation task. In an embodiment, the method in this embodiment of the present application downplays a computation process of a hash value, and mainly focuses on simulating data interaction between the digital certificate generation device and the mining pool. Therefore, the random hash value in this embodiment of the present application is not an actual computed hash value, but a random value or symbol. In addition, the random hash value is sent to the mining pool based on the digital certificate type. The mining pool may not determine whether the hash value is correct or not, that is, the mining pool deems the received hash value of the simulation apparatus correct by default, without verification and checking of this correctness. Herein, frequency of submitting hash values varies depending on different types of digital certificates. A hash value may be submitted based on a digital certificate type, and the mining pool may adjust, based on the frequency of submitting hash values, a difficulty of a digital certificate generation task delivered to the simulation apparatus. After receiving the random hash value, the mining pool calculates a corresponding work, and determines allocation of work revenue based on the work, but does not deliver the work revenue to the simulation apparatus.

The above is an embodiment of simulating normal data interaction between the digital certificate generation device and the mining pool. During the simulation of the data interaction between the digital certificate generation device and the mining pool, whether the mining pool is anomalous can be diagnosed based on feedback information of the mining pool. For example, it may be diagnosed, based on the digital certificate generation task, whether a connection between the mining pool and the apparatus for simulating the digital certificate generation device is normal and whether authentication performed by the mining pool is normal; it may be diagnosed, based on the work, whether a work algorithm of the mining pool is normal, for example, whether the work is calculated as being more or less than the actual case; and it is diagnosed, based on the work revenue, whether allocation of the work revenue by the mining pool is correct. Therefore, by means of the simulation of interaction between a digital certificate generation device of a target type and the mining pool, performance of the mining pool is diagnosed without a need to purchase a large number of digital certificate generation devices, resulting in low costs.

Further, in some other embodiments, sending, by the digital certificate generation device, anomalous digital certificate generation request information to the mining pool may alternatively be simulated, that is, an anomalous behavior of the digital certificate generation device is simulated, to carry out a malicious attack on the mining pool and provide support for diagnosing a defense capability of the mining pool. For example, an invalid hash value is maliciously submitted.

In an embodiment, simulating sending, by the digital certificate generation device, the anomalous digital certificate generation request information to the mining pool includes: simulating obtaining, by the digital certificate generation device, a first random hash value based on the digital certificate generation task, and sending the first random hash value to the mining pool; and transforming the first random hash value, for example, changing a format of the first random hash value, to obtain a second random hash value, and sending the second random hash value to the mining pool. Specifically, for example, the first random hash value is an uppercase string, and the second random hash value is a lowercase string corresponding to the first random hash value, but in fact, the two are essentially the same. In short, for the received digital certificate generation task, random hash values that are essentially the same are submitted twice with the intention of obtaining double work revenue, thereby simulating a malicious behavior of the digital certificate generation device against the mining pool.

Further, in an embodiment, after receiving the random hash value, the mining pool converts the random hash value into a unified format and temporarily stores it in a database. Upon receiving the first random hash value, the mining pool queries whether the first random hash value has been temporarily stored in the database. If the first random hash value has not been temporarily stored in the database, the first random hash value is used to calculate a work. If the first random hash value has been temporarily stored in the database, that is, the random hash value is duplicate, the random hash value is discarded. Then, when the second random hash value is received, the same query may be performed. A random hash value with only its format changed may also be discarded. Based on this, it can be determined, based on format verification information of the mining pool for a random hash value, whether the mining pool has discarded the second random hash value that is submitted maliciously. If the received random hash values that are essentially the same but have different formats are used to calculate a work, it is considered that the defense capability of the mining pool is weak, thereby diagnosing the defense capability of the mining pool.

In some other embodiments, simulating sending, by the digital certificate generation device, the anomalous digital certificate generation request information to the mining pool may alternatively include: obtaining a random hash value after the digital certificate generation task is received, and reporting the random hash value to the mining pool even when the random hash value does not meet a difficulty of the digital certificate generation task.

Specifically, the simulation apparatus for simulating digital certificate generation obtains the random hash value after receiving the digital certificate generation task, and a physical digital certificate generation device submits the hash value to the mining pool only when the hash value meets a threshold condition of the digital certificate generation task. In the present application, a threshold condition for the hash value may be lowered by means of a network programming module of a programming language such as Python, or the threshold condition may be directly deleted. As such, the simulation apparatus receives the digital certificate generation task and obtains the random hash value, and submits the random hash value to the mining pool even though the random hash value does not meet a threshold condition for submission, causing a malicious attack on the mining pool with the intention of obtaining more work revenue, thereby simulating a malicious behavior of the digital certificate generation device against the mining pool.

Further, in an embodiment, after receiving the above random hash value, the mining pool determines, based on a task difficulty corresponding to the random hash value, for example, whether the random hash value meets the difficulty of the digital certificate generation task. If the random hash value does not satisfy a threshold condition for submission of a hash value, the random hash value is discarded. When there is an anomaly in the mining pool, for example, when the task difficulty solved by the random hash value is not verified or the verification on the task difficulty is anomalous, an error may occur in work allocation, that is, the mining pool is anomalous. Therefore, it may be diagnosed, based on the above simulation of the anomalous behavior of the digital certificate generation device, whether the mining pool is anomalous.

In some embodiments, establishing, by the digital certificate generation device, a connection to the mining pool may be further simulated based on the digital certificate connection protocol, thereby implementing a stress test on the mining pool. Specifically, a multi-process and/or multi-thread manner is used to simulate establishing, by a plurality of digital certificate generation devices, connections to the mining pool, and simulate normal behaviors of the digital certificate generation devices to interact with the mining pool to determine whether the feedback information and the verification information of the mining pool are normal, to diagnose an anti-stress capability of the mining pool and therefore implement the stress test.

For example, a simulation apparatus such as a computer terminal is provided. On the simulation apparatus, a network programming module of a programming language such as Python may be used to implement a remote procedure call (RPC) socket connection and interaction. For example, a program framework that simulates a connection in a multi-thread manner may be written by means of a Python gevent module, and connections between the plurality of digital certificate generation devices and the mining pool may be simulated in a multi-thread manner; or a function of multi-process synchronous socket connection may be implemented by means of a Python epoll module to simulate establishing, by more digital certificate generation devices, connections to the mining pool. In short, the state machine mode of the digital certificate generation device is simulated, such that connection behaviors of thousands of digital certificate generation devices can be replicated, and there is no need to purchase physical digital certificate generation devices for connection testing, resulting in low costs. Further, it may be determined, based on the feedback information or the verification information for the mining pool side, whether the mining pool is anomalous, thereby implementing a stress test on the mining pool and diagnosing a processing capacity and a throughput of the mining pool.

In summary, according to the method for simulating the digital certificate generation device in this embodiment of the present application, a connection protocol is determined based on a digital certificate type, and connections between different digital certificate generation devices and a mining pool can be simulated based on connection protocols, providing support for research and development of new types of digital certificates and the mining pool; various data interaction behaviors between the digital certificate generation devices and the mining pool can be simulated, such as a normal behavior and an anomalous behavior, providing support for diagnosing performance of the mining pool, and resulting in low costs; and massive connections between digital certificate generation devices and the mining pool can be simulated, providing support for a stress test of the mining pool, and facilitating research and development, and maintenance of the mining pool.

In this embodiment of the present application, the method for simulating digital certificate generation may be data generation that is related to a digital certificate and that is performed by the apparatus for simulating digital certificate generation. More specifically, the digital certificate may be a work digital certificate. That is, the method is a method for simulating work digital certificate generation.

An apparatus for simulating digital certificate generation according to an embodiment of a second aspect of the present application is described below with reference to the accompanying drawings.

FIG. 2 is a block diagram of an apparatus for simulating digital certificate generation according to an embodiment of the present application. As shown in FIG. 2, the apparatus 1 for simulating digital certificate generation in this embodiment of the present application includes a determination module 10, a first connection module 11, an information sending module 12, and an information receiving module 13.

The determination module 10 is configured to determine a digital certificate connection protocol based on a digital certificate type. The first connection module 11 is configured to simulate, based on the digital certificate connection protocol, establishing, by a digital certificate generation device, a connection to a mining pool. The information sending module 12 is configured to simulate sending, by the digital certificate generation device, digital certificate generation request information to the mining pool. The information receiving module 13 is configured to receive feedback information of the mining pool for the digital certificate generation request information.

According to the apparatus 1 for simulating digital certificate generation in this embodiment of the present application, the determination module 10 may be used to determine the digital certificate connection protocol based on the digital certificate type, and the connection to the mining pool may be established. Therefore, this is not limited by the digital certificate type. In other words, connections between different types of digital certificate generation devices and the mining pool can be simulated. In addition, the information sending module 12 and the information receiving module 13 may be used to simulate data interaction between the digital certificate generation device and the mining pool. In this way, support is provided for diagnosing performance of the mining pool, a more comprehensive diagnosis of performance of the mining pool is performed without requiring a large number of physical digital certificate generation devices, and costs are low. In addition, a behavior of simulating the digital certificate generation device can be debugged based on diagnostic needs, implementing customized debugging.

In some embodiments, the information sending module 12 may simulate sending, by the digital certificate generation device, normal digital certificate generation request information to the mining pool to assist in diagnosing whether the performance of the mining pool is good. For example, the normal digital certificate generation request information may include behaviors such as subscription information, authentication information, obtaining a digital certificate generation task, and submitting a share.

Further, as shown in FIG. 3, the information sending module 12 includes an authentication information sending unit 121, a first hash sending unit 122, and a subscription information sending unit 120. The information receiving module 13 includes a task receiving unit 131 and a subscription acknowledgment receiving unit 132. The subscription information sending unit 120 is configured to send subscription information to the mining pool. The authentication information sending unit 121 is configured to send authentication information to the mining pool. The first hash sending unit 122 is configured to obtain a random hash value based on a digital certificate generation task, and send the random hash value to the mining pool based on the digital certificate type. The task receiving unit 131 is configured to: when it is authorized to generate a digital certificate, receive the digital certificate generation task delivered by the mining pool. The subscription acknowledgment receiving unit 132 is configured to receive connection acknowledgment information of the mining pool based on the subscription information. In an embodiment, a computation process of a hash value is downplayed, and a focus is mainly on simulating data interaction between the digital certificate generation device and the mining pool. Therefore, the random hash value is not an actual computed hash value, but a random value or symbol. In addition, the random hash value is sent to the mining pool based on the digital certificate type. The mining pool side may not determine whether the hash value is correct or not, but deems the hash value correct by default.

In some other embodiments, the information sending module 12 may simulate sending, by the digital certificate generation device, anomalous digital certificate generation request information to the mining pool, that is, simulate an anomalous behavior of the digital certificate generation device, to carry out a malicious attack on the mining pool and provide support for diagnosing a defense capability of the mining pool. For example, an invalid hash value is maliciously submitted, to obtain more work revenue.

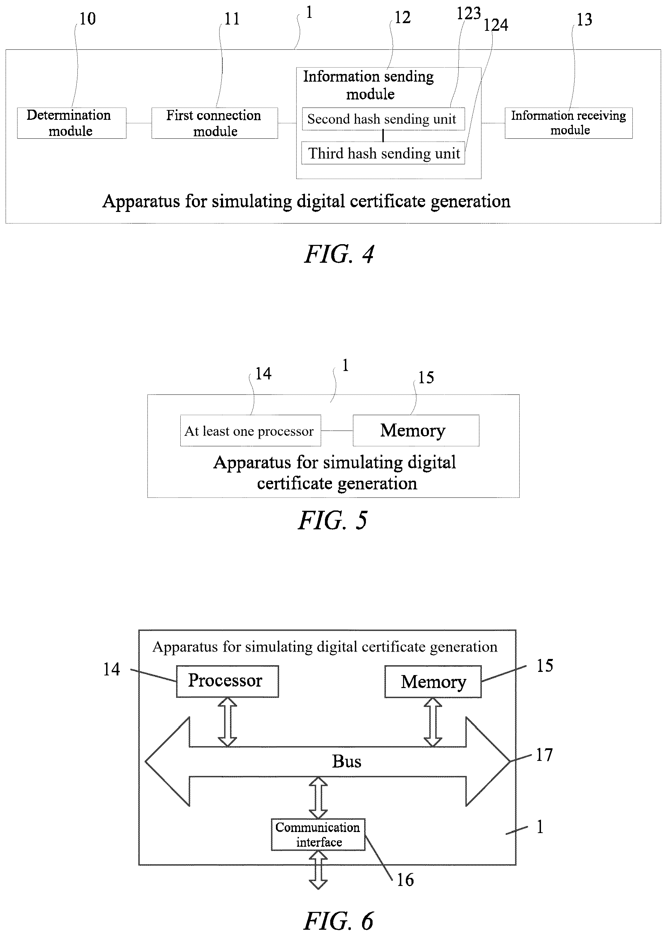

Further, as shown in FIG. 4, the information sending module 12 may include a second hash sending unit 123 and a third hash sending unit 124. The second hash sending unit 123 is configured to simulate obtaining, by the digital certificate generation device, a first random hash value based on the digital certificate generation task, and send the first random hash value to the mining pool. The third hash sending unit 124 is configured to transform the first random hash value to obtain a second random hash value, and send the second random hash value to the mining pool. In short, for the received digital certificate generation task, random hash values that are essentially the same are submitted twice with the intention of obtaining double work revenue, thereby simulating a malicious behavior of the digital certificate generation device against the mining pool.

Alternatively, the information sending module 12 obtains a random hash value after the digital certificate generation task is received, and reports the random hash value to the mining pool even when the random hash value does not meet a difficulty of the digital certificate generation task, causing a malicious attack on the mining pool to obtain more work revenue, thereby simulating a malicious behavior of the digital certificate generation device against the mining pool.

In some embodiments, establishing, by the digital certificate generation device, a connection to the mining pool may be further simulated based on the digital certificate connection protocol, thereby implementing a stress test on the mining pool. Specifically, the first connection module 11 simulates, in a multi-process and/or multi-thread manner, establishing, by a plurality of digital certificate generation devices, connections to the mining pool, and simulates normal behaviors of the digital certificate generation devices to interact with the mining pool to determine whether the feedback information and the verification information of the mining pool are normal, to diagnose an anti-stress capability of the mining pool and therefore implement the stress test.

Further, during simulating the normal behavior and the anomalous behavior of the above digital certificate generation device and simulating establishing, by massive digital certificate generation devices, connections to the mining pool, it may be determined, based on the feedback information and the verification information of the mining pool, whether the mining pool is anomalous, thereby diagnosing the mining pool.

In short, the apparatus 1 for simulating digital certificate generation in this embodiment of the present application can simulate establishing, by different types of digital certificate generation devices, connections to the mining pool, and simulate a plurality of interaction behaviors between the digital certificate generation device and the mining pool. Support is provided for diagnosing performance of the mining pool, and customized debugging can be performed based on diagnostic needs. In addition, there is no need to purchase a large number of or different types of physical digital certificate generation devices, resulting in low costs.

Based on the method for simulating digital certificate generation in the foregoing embodiment, FIG. 5 is a block diagram of an apparatus for simulating digital certificate generation according to an embodiment of the present application. As shown in FIG. 5, the apparatus 1 for simulating digital certificate generation in this embodiment of the present application includes at least one processor 14 and a memory 15 communicatively connected to the at least one processor 14. The memory 15 stores instructions executable by the at least one processor 14, and when executed by the at least one processor 14, the instructions cause the at least one processor 14 to perform the method for simulating digital certificate generation according to the foregoing embodiment. In this embodiment of the present application, the method for simulating digital certificate generation may be data generation that is related to a digital certificate and that is performed by the apparatus for simulating digital certificate generation. More specifically, the digital certificate may be a work digital certificate. That is, the method is a method for simulating work digital certificate generation.

In FIG. 6, taking one processor 14 and a memory 15 as an example, a communication interface 16 and a bus 17 may further be included. The processor 14, the communication interface 16, and the memory 15 can communicate with each other through the bus 17. The communication interface 16 can be used for information transmission. The processor 14 can call logical instructions in the memory 15 to perform the method for simulating digital certificate generation according to the foregoing embodiment.

In addition, the foregoing logical instructions in the memory 15 may be stored in a computer-readable storage medium when implemented in the form of a software functional unit and sold or used as an independent product.

As a computer-readable storage medium, the memory 15 may be used to store a software program and a computer-executable program, such as program instructions/modules corresponding to the methods in the embodiments of the present application. The processor 14 executes functional applications and data generation by running the software programs, instructions, and modules stored in the memory 15, that is, implements the method for simulating digital certificate generation according to the foregoing method embodiment.

The memory 15 may include a program storage area and a data storage area; where the program storage area may store an operating system and an application program required by at least one function; and the data storage area may store data created based on the use of a terminal device, etc. In addition, the memory 15 may include a high-speed random access memory, and may further include a non-volatile memory.

A method for simulating digital certificate generation according to an embodiment of a fourth aspect of the present application is described below with reference to the accompanying drawings.

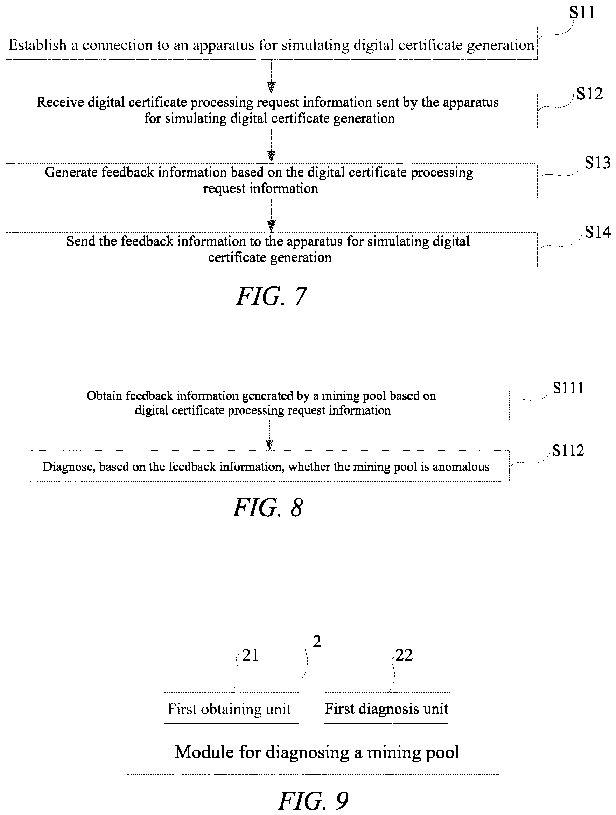

FIG. 7 is a method for simulating digital certificate generation according to an embodiment of the present application, where the method for simulating digital certificate generation according to the embodiment of this aspect is applied to a mining pool. As shown in FIG. 7, the method includes steps S11, S12, S13, and S14:
step S11: establishing a connection to the apparatus for simulating digital certificate generation according to the foregoing embodiment;
step S12: receiving digital certificate generation request information sent by the apparatus for simulating digital certificate generation;
step S13: generating feedback information based on the digital certificate generation request information; and
step S14: sending the feedback information to the apparatus for simulating digital certificate generation.

According to the method for simulating digital certificate generation in this embodiment of the present application, the mining pool can implement, based on the digital certificate generation request information of the apparatus for simulating digital certificate generation, data interaction with the apparatus for simulating digital certificate generation, and simulate generation processes of different types of digital certificates, providing support for diagnosing performance of the mining pool without relying on various types of physical digital certificate generation devices, and resulting in low costs. In addition, based on diagnostic needs, customized debugging can be performed on the apparatus for simulating digital certificate generation.

Further, in some embodiments, the digital certificate generation request information includes normal digital certificate generation request information such as subscription information, authentication information, or a submitted hash value. Specifically, the generating feedback information based on the digital certificate generation request information includes: receiving subscription information of the apparatus for simulating digital certificate generation, and generating connection acknowledgment information based on the subscription information; receiving authentication information of the apparatus for simulating digital certificate generation, and performing authentication based on the authentication information; and when it is determined that the apparatus for simulating digital certificate generation is authorized to generate a digital certificate, generating a digital certificate generation task, and delivering the digital certificate generation task to the apparatus for simulating digital certificate generation. The apparatus for simulating digital certificate generation obtains a random hash value when receiving the digital certificate generation task, and submits the random hash value to the mining pool. The mining pool receives the random hash value, calculates a work based on the random hash value and a work algorithm of a corresponding digital certificate type, and allocates work revenue based on the work. Further, when simulating interaction between a normal digital certificate generation behavior and the mining pool, the apparatus for simulating digital certificate generation may diagnose, based on the feedback information of the mining pool, whether the mining pool is anomalous, such as a deviation in the work algorithm of the mining pool or an authentication failure, thereby diagnosing performance of the mining pool.

In addition, when the apparatus for simulating digital certificate generation simulates, in a multi-process manner and/or multi-thread manner, establishing, by a plurality of digital certificate generation devices, connections to the mining pool, and simulates interaction behaviors between the digital certificate generation devices and the mining pool, the mining pool can also make a feedback based on the foregoing normal digital certificate request information. In this process, it may be diagnosed, based on the feedback of the mining pool, whether the mining pool is anomalous, thereby implementing a stress test on the mining pool.

In some other embodiments, the digital certificate generation request information includes anomalous digital certificate generation request information, and the method in the present application further includes: performing anomaly verification based on the digital certificate generation request information, to provide support for diagnosing a defense capability of the mining pool. For example, an invalid hash value is maliciously submitted, to obtain more work revenue.

Specifically, the performing anomaly verification based on the digital certificate generation request information includes: receiving a random hash value sent by the apparatus for simulating digital certificate generation; verifying whether the random hash value is duplicate, where if the random hash value is duplicate, that is, for the received digital certificate generation task, the simulation apparatus submits twice random hash values that are essentially the same, with the intention of obtaining double work revenue, the mining pool discards one of the duplicate random hash values; and determining whether the random hash value meets a difficulty of a digital certificate generation task, and if the random hash value does not meet the difficulty of the digital certificate generation task, discarding the random hash value. Further, it may be determined, based on verification information of the mining pool, whether the mining pool is anomalous, for example, whether the mining pool has discarded a second random hash value that is submitted maliciously, thereby diagnosing a defense capability of the mining pool.

A method for diagnosing a mining pool according to an embodiment of a fifth aspect of the present application is described below with reference to the accompanying drawings.

FIG. 8 is a flowchart of a method for diagnosing a mining pool according to an embodiment of the present application. As shown in FIG. 8, the method for diagnosing a mining pool in this embodiment of the present application includes steps Sill and S112:
step Sill: obtaining feedback information generated by a mining pool based on digital certificate generation request information,
where the digital certificate generation request information is sent by the apparatus for simulating digital certificate generation according to the foregoing embodiment, that is, establishing, by the apparatus for simulating digital certificate generation, a connection to the mining pool is simulated, and data interaction between the digital certificate generation device and the mining pool is simulated, and in this process, the diagnosis apparatus obtains the feedback information of the mining pool, for example, performing authentication based on authentication information, delivering a digital certificate generation task, etc.; and
step S112: diagnosing, based on the feedback information, whether the mining pool is anomalous.

Specifically, if the feedback from the mining pool is normal, the mining pool is considered normal, and if the feedback from the mining pool is anomalous, the mining pool is considered anomalous.

According to the method for diagnosing a mining pool in this embodiment of the present application, the feedback information of the mining pool is obtained based on a connection and data interaction between the apparatus for simulating digital certificate generation and the mining pool, and the mining pool is diagnosed based on the feedback information. Based on diagnostic needs, customized debugging can be performed on the apparatus for simulating digital certificate generation, implementing a diagnosis of various performances of the mining pool without relying on a physical digital certificate generation device, and resulting in low costs.

In some embodiments, the feedback information of the mining pool includes at least one of connection acknowledgment information and a digital certificate generation task, and the diagnosing, based on the feedback information, whether the mining pool is anomalous includes at least one of the following: diagnosing, based on the connection acknowledgment information, whether a connection between the mining pool and the apparatus for simulating digital certificate generation is normal; and diagnosing, based on the digital certificate generation task, whether authentication performed by the mining pool on the apparatus for simulating digital certificate generation is normal. The mining pool delivers a digital certificate generation task to the apparatus for simulating digital certificate generation only when the connection between the mining pool and the apparatus for simulating digital certificate generation is normal and authentication is valid. Otherwise, the mining pool is considered anomalous.

In some embodiments, in the method for diagnosing a mining pool in the present application, it may be further diagnosed, based on a work, whether a work algorithm of the mining pool is normal, where the work is calculated by the mining pool based on a received random hash value and a computational amount algorithm of a corresponding digital certificate type; and it may also be diagnosed, based on work revenue, whether allocation of the work revenue by the mining pool is correct, where the work revenue is allocated by the mining pool based on a work.

In some embodiments, the method in this embodiment of the present application further includes: obtaining verification information of the mining pool for the digital certificate generation request information; and diagnosing, based on the verification information, whether the mining pool is anomalous, where the mining pool is considered anomalous when the mining pool does not perform verification or fails to perform verification.

Further, in an embodiment, the verification information may include at least one of duplicate verification information for a received random hash value and task difficulty verification information for the random hash value, and the diagnosing, based on the verification information, whether the mining pool is anomalous includes at least one of the following: when it is verified that the received random hash value is duplicate, but the random hash value is still used to calculate a work, diagnosing the mining pool as anomalous; or when it is verified that the received random hash value does not meet a difficulty of a corresponding digital certificate generation task, but the random hash value is still used to calculate a work, diagnosing the mining pool as anomalous.

In an embodiment, related information such as feedback or verification related information in a process of generating a digital certificate may be obtained by collecting statuses of CPU usage, memory usage, hard disk read and write, and network bandwidth of the mining pool.

A module for diagnosing a mining pool according to an embodiment of a sixth aspect of the present application is described below with reference to the accompanying drawings.

FIG. 9 is a block diagram of a module for diagnosing a mining pool according to an embodiment of the present application. In this embodiment, the module for diagnosing a mining pool may include an independent diagnosis apparatus or a program module disposed in a mining pool. As shown in FIG. 9, the module 2 for diagnosing a mining pool in this embodiment of the present application includes a first obtaining unit 21 and a first diagnosis unit 22.

The first obtaining unit 21 is configured to obtain feedback information generated by the mining pool based on digital certificate generation request information, where the digital certificate generation request information is sent by the apparatus for simulating digital certificate generation in the foregoing embodiment. The first diagnosis unit 22 is configured to diagnose, based on the feedback information, whether the mining pool is anomalous.

According to the module 2 for diagnosing a mining pool in this embodiment of the present application, the feedback information of the mining pool is obtained based on a connection and data interaction between the apparatus for simulating digital certificate generation and the mining pool, and the mining pool is diagnosed based on the feedback information. Based on diagnostic needs, customized debugging can be performed on the apparatus for simulating digital certificate generation, implementing a diagnosis of various performances of the mining pool without relying on a physical digital certificate generation device, and resulting in low costs.

In some embodiments, the feedback information includes at least one of connection acknowledgment information and a digital certificate generation task, and when diagnosing whether the mining pool is anomalous, the first diagnosis unit 22 is configured to perform at least one of the following: diagnosing, based on the connection acknowledgment information, whether a connection between the mining pool and the apparatus for simulating digital certificate generation is normal; and diagnosing, based on the digital certificate generation task, whether authentication performed by the mining pool on the apparatus for simulating digital certificate generation is normal. The mining pool delivers a digital certificate generation task to the apparatus for simulating digital certificate generation only when the connection between the mining pool and the apparatus for simulating digital certificate generation is normal and authentication is valid. Otherwise, the mining pool is considered anomalous.

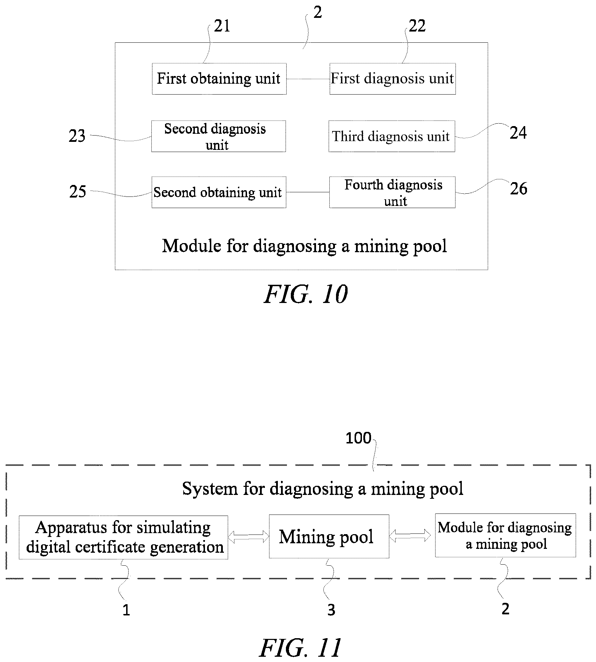

In some embodiments, as shown in FIG. 10, the module 2 for diagnosing a mining pool in the present application further includes a second diagnosis unit 23 and a third diagnosis unit 24. The second diagnosis unit 23 is configured to diagnose, based on a work, whether a work algorithm of the mining pool is normal, where the work is calculated by the mining pool based on a received random hash value and a computational amount algorithm of a corresponding digital certificate type. The third diagnosis unit 24 is configured to diagnose, based on work revenue, whether allocation of the work revenue by the mining pool is correct, where the work revenue is allocated by the mining pool based on a work.

In some embodiments, as shown in FIG. 10, the module 2 for diagnosing a mining pool further includes a second obtaining unit 25 and a fourth diagnosis unit 26. The second obtaining unit 25 is configured to obtain verification information of the mining pool for the digital certificate generation request information. The fourth diagnosis unit 26 is configured to diagnose, based on the verification information, whether the mining pool is anomalous, where the mining pool is considered anomalous when the mining pool does not perform verification or fails to perform verification.

Further, in some embodiments, the verification information may include at least one of duplicate verification information for a received random hash value and difficulty verification information for the random hash value, and when diagnosing whether the mining pool is anomalous, the fourth diagnosis unit 26 is configured to perform at least one of the following: when it is verified that the received random hash value is duplicate, but the random hash value is still used to calculate a work, diagnosing the mining pool as anomalous; or when it is verified that the received random hash value does not meet a difficulty of a corresponding digital certificate generation task, but the random hash value is still used to calculate a work, diagnosing the mining pool as anomalous.

Based on the apparatus for simulating digital certificate generation and the module for diagnosing a mining pool according to the foregoing embodiments, a system for diagnosing a mining pool according to an embodiment of a seventh aspect of the present application is described below with reference to the accompanying drawings.

FIG. 11 is a block diagram of a system for diagnosing a mining pool according to an embodiment of the present application. As shown in FIG. 11, the system 100 for diagnosing a mining pool according to this embodiment of the present application includes a mining pool 3, an apparatus 1 for simulating digital certificate generation, and a module 2 for diagnosing a mining pool.

The apparatus 1 for simulating digital certificate generation determines a connection protocol based on a digital certificate type, simulates, based on the connection protocol, establishing, by a digital certificate generation device, a connection to the mining pool 3, and simulates data interaction between the digital certificate generation device and the mining pool 3. The apparatus 1 for simulating digital certificate generation may be debugged based on diagnostic needs, and can both simulate a normal behavior of the digital certificate generation device to interact with the mining pool 2 and simulate an anomalous behavior of the digital certificate generation device to interact with the mining pool 3. During the interaction between the apparatus 1 for simulating digital certificate generation and the mining pool 3, the module 2 for diagnosing a mining pool obtains information of the mining pool 3, such as feedback information or verification information, and diagnoses, based on the feedback information or the verification information, whether the mining pool 3 is anomalous. For composition of the apparatus 1 for simulating digital certificate generation, an interaction process between the apparatus and the mining pool 3, and a specific process of diagnosing the mining pool 3, reference may be made to the description in the foregoing embodiments. Therefore, data interaction is simulated based on the apparatus 1 for simulating digital certificate generation, to diagnose the mining pool 3, and costs are low. In addition, based on diagnostic needs, customized debugging can be performed on the apparatus 1 for simulating digital certificate generation, which is more flexible.

A computer-readable storage medium according to an embodiment of an eighth aspect of the present application stores computer-executable instructions, and the computer-executable instructions are configured to perform the method for simulating digital certificate generation according to the foregoing embodiment, or perform the method for diagnosing a mining pool according to the foregoing embodiment.

A computer program product according to an embodiment of a ninth aspect of the present application includes a computer program stored on a computer-readable storage medium, the computer program includes program instructions, and when executed by a computer, the program instructions cause the computer to perform the method for simulating digital certificate generation according to the foregoing embodiment, or cause the computer to perform the method for diagnosing a mining pool according to the foregoing embodiment.

It should be noted that, the technical solutions in the embodiments of the present application may be embodied in the form of a software product. The computer software product is stored in a storage medium, and includes one or more instructions used to cause a computer device (which may be a personal computer, a server, a network device, etc.) to perform all or some of the steps of the method in the embodiments of the present application. The foregoing storage medium may be a non-transitory storage medium, including: a USB flash drive, a removable hard disk, a read-only memory (ROM), a random access memory (RAM), a magnetic disk or an optical disc, or other various media capable of storing program code, or may be a transitory storage medium.

When used in the present application, although the terms "first", "second", etc. may be used in the present application to describe various elements, these elements should not be limited by these terms. These terms are only used to distinguish one element from another. For example, without changing the meaning of the description, a first element can be referred to as a second element, and similarly, the second element can be referred to as the first element, provided that all the terms "first element" present are renamed consistently and all the terms "second element" present are renamed consistently. The first element and the second element are both elements, but can be different.

The wording used in the present application is only used to describe the embodiments, and is not used to limit the claims. As used in the description of the embodiments and the claims, the singular forms "a", "an", and "the" are also intended to include the plural forms, unless otherwise clearly indicated in the context. Similarly, the term "and/or" as used in the present application refers to any and all possible combinations that include one or more of the associated listed items Additionally, when used in the present application, the term "comprise" and the variations thereof, such as "comprises" and/or "comprising", refer to the presence of described features, entities, steps, operations, elements, and/or components, but do not exclude the presence or addition of one or more other features, entities, steps, operations, elements, components, and/or a combination thereof.

The aspects, embodiments, implementations, or features in the described embodiments can be used alone or in any combination. The aspects in the described embodiments can be implemented by software, hardware, or a combination thereof. The described embodiments may also be embodied by a computer-readable medium storing computer-readable code, and the computer-readable code includes instructions executable by at least one computing apparatus. The computer-readable medium may be associated with any data storage apparatus capable of storing data that can be read by a computer system. For example, the computer-readable medium may include a read-only memory, a random access memory, a CD-ROM, an HDD, a DVD, a magnetic tape, an optical data storage apparatus, etc. The computer-readable medium may also be distributed in a computer system connected through a network, so that the computer-readable code can be stored and executed in a distributed manner.

With regard to the foregoing technical description, reference may be made to the accompanying drawings, which form a part of the present application and show, through the description, the implementations according to the described embodiments. Although these embodiments are described in sufficient detail to enable those skilled in the art to implement these embodiments, these embodiments are not limiting. In this way, other embodiments can be used, and changes can be made without departing from the scope of the described embodiments. For example, the sequence of operations described in the flowchart is not limiting, and therefore, the sequence of two or more operations set forth in the flowchart and described according to the flowchart can be changed according to several embodiments. As another example, in several embodiments, one or more operations illustrated in the flowchart and described according to the flowchart are optional or may be deleted. In addition, some steps or functions may be added to the disclosed embodiments, or two or more steps may be performed in reverse order. All these changes are considered to be included in the disclosed embodiments and claims.

In addition, terms are used in the foregoing technical description to provide a thorough understanding of the described embodiments. However, excessive details are not required to implement the described embodiments. Therefore, the foregoing description of the embodiments is presented for explanation and description. The embodiments presented in the foregoing description and the examples disclosed according to these embodiments are provided separately to add context and help understand the described embodiments. The foregoing description is not intended to be exhaustive or to limit the described embodiments to the precise form of the present application. Based on the teaching described above, modifications, selective applications, and changes are possible. In some cases, well-known processing steps are not described in detail, to avoid unnecessarily affecting the described embodiments.

## Claims

1. A method for simulating digital certificate generation, **characterized by** comprising:
determining a digital certificate connection protocol based on a digital certificate type;
simulating, based on the digital certificate connection protocol, establishing, by a digital certificate processing device, a connection to a mining pool;
simulating sending, by the digital certificate generation device, digital certificate generation request information to the mining pool; and
receiving feedback information of the mining pool for the digital certificate generation request information.

2. The method for simulating digital certificate generation according to claim 1, **characterized in that** the simulating sending, by the digital certificate generation device, digital certificate generation request information to the mining pool comprises:
simulating sending, by the digital certificate generation device, normal digital certificate generation request information to the mining pool.

3. The method for simulating digital certificate generation according to claim 2, **characterized in that**
the simulating sending, by the digital certificate generation device, normal digital certificate generation request information to the mining pool comprises:
sending subscription information and authentication information to the mining pool; and
obtaining a random hash value based on a received digital certificate generation task, and sending the random hash value to the mining pool based on the digital certificate type; and
the receiving feedback information of the mining pool for the request information comprises:
receiving connection acknowledgment information fed back by the mining pool based on the subscription information; and
when it is determined, based on the authentication information, that it is authorized to generate a digital certificate, receiving the digital certificate generation task delivered by the mining pool.

4. The method for simulating digital certificate generation according to claim 1, **characterized in that** the simulating sending, by the digital certificate generation device, digital certificate generation request information to the mining pool comprises:
simulating sending, by the digital certificate generation device, anomalous digital certificate generation request information to the mining pool.

5. The method for simulating digital certificate generation according to claim 4, **characterized in that** the simulating sending, by the digital certificate generation device, anomalous digital certificate generation request information to the mining pool comprises:
simulating obtaining, by the digital certificate generation device, a first random hash value based on the digital certificate generation task, and sending the first random hash value to the mining pool; and transforming the first random hash value to obtain a second random hash value, and sending the second random hash value to the mining pool;
or obtaining a random hash value after the digital certificate generation task is received, and reporting the random hash value to the mining pool even when the random hash value does not meet a difficulty of the digital certificate generation task.

6. The method for simulating digital certificate generation according to claim 1, **characterized in that** the simulating, based on the digital certificate connection protocol, establishing, by a digital certificate generation device, a connection to a mining pool comprises:
simulating, in a multi-process and/or multi-thread manner, establishing, by a plurality of digital certificate generation devices, connections to the mining pool.

7. An apparatus for simulating digital certificate generation, **characterized by** comprising:
a determination module configured to determine a digital certificate connection protocol based on a digital certificate type;
a first connection module configured to simulate, based on the digital certificate connection protocol, establishing, by a digital certificate generation device, a connection to a mining pool;
an information sending module configured to simulate sending, by the digital certificate generation device, digital certificate generation request information to the mining pool; and
an information receiving module configured to receive feedback information of the mining pool for the digital certificate generation request information.

8. The apparatus for simulating digital certificate generation according to claim 7, **characterized in that** when sending the digital certificate generation request information, the information sending module is further configured to simulate sending, by the digital certificate generation device, normal digital certificate generation request information to the mining pool.

9. The apparatus for simulating digital certificate generation according to claim 8, **characterized in that**
the information sending module comprises:
a subscription information sending unit configured to send subscription information to the mining pool;
an authentication information sending unit configured to send authentication information to the mining pool; and
a first hash sending unit configured to obtain a random hash value based on the digital certificate generation task, and send the random hash value to the mining pool based on the digital certificate type; and
the information receiving module comprises:
a subscription acknowledgment receiving unit configured to receive connection acknowledgment information of the mining pool based on the subscription information; and
a task receiving unit configured to: when it is authorized to generate a digital certificate, receive the digital certificate generation task delivered by the mining pool.

10. The apparatus for simulating digital certificate generation according to claim 7, **characterized in that** when sending the digital certificate generation request information, the information sending module is further configured to simulate sending, by the digital certificate generation device, anomalous digital certificate generation request information to the mining pool.

11. The apparatus for simulating digital certificate generation according to claim 10, **characterized in that** the information sending module comprises:
a second hash sending unit configured to simulate obtaining, by the digital certificate generation device, a first random hash value based on the digital certificate generation task, and send the first random hash value to the mining pool; and
a third hash sending unit configured to transform the first random hash value to obtain a second random hash value, and send the second random hash value to the mining pool;
or when simulating sending, by the digital certificate generation device, the anomalous digital certificate generation request information to the mining pool, the information sending module is further configured to obtain a random hash value after the digital certificate generation task is received, and report the random hash value to the mining pool even when the random hash value does not meet a difficulty of the digital certificate generation task.

12. The apparatus for simulating digital certificate generation according to claim 7, **characterized in that** when simulating establishing, by the digital certificate generation device, a connection to the mining pool, the first connection module is further configured to simulate, in a multi-process and/or multi-thread manner, establishing, by a plurality of digital certificate generation devices, connections to the mining pool.

13. An apparatus for simulating digital certificate generation, **characterized by** comprising:
at least one processor; and
a memory communicatively connected to the at least one processor, wherein
the memory stores instructions executable by the at least one processor, and when executed by the at least one processor, the instructions cause the at least one processor to perform the method for simulating digital certificate generation according to any one of claims 1 to 6.

14. A method for simulating digital certificate generation, **characterized by** comprising:
establishing a connection to an apparatus for simulating digital certificate generation according to any one of claims 7 to 12;
receiving digital certificate processing request information sent by the apparatus for simulating digital certificate generation;
generating feedback information based on the digital certificate generation request information; and
sending the feedback information to the apparatus for simulating digital certificate generation.

15. The method for simulating digital certificate generation according to claim 14, **characterized in that** the digital certificate generation request information comprises normal digital certificate generation request information, and the generating feedback information based on the digital certificate generation request information comprises:
receiving subscription information of the apparatus for simulating digital certificate generation, and generating connection acknowledgment information based on the subscription information;
receiving authentication information of the apparatus for simulating digital certificate generation, and performing authentication based on the authentication information; and
when it is determined that the apparatus for simulating digital certificate generation is authorized to generate a digital certificate, generating a digital certificate generation task.

16. The method for simulating digital certificate generation according to claim 14, **characterized in that** the digital certificate generation request information comprises anomalous digital certificate generation request information, and the method further comprises: performing anomaly verification based on the digital certificate generation request information.

17. The method for simulating digital certificate generation according to claim 16, **characterized in that** the performing anomaly verification based on the digital certificate generation request information comprises:
receiving a random hash value sent by the apparatus for simulating digital certificate generation;
verifying whether the random hash value is duplicate, and
if the random hash value is duplicate, discarding one of the duplicate random hash values; and
determining whether the random hash value meets a difficulty of a digital certificate generation task, and
if the random hash value does not meet the difficulty of the digital certificate generation task, discarding the random hash value.

18. A method for diagnosing a mining pool, **characterized by** comprising:
obtaining feedback information generated by a mining pool based on digital certificate generation request information, wherein the digital certificate generation request information is sent by an apparatus for simulating digital certificate generation according to any one of claims 7 to 12; and
diagnosing, based on the feedback information, whether the mining pool is anomalous.

19. The method for diagnosing a mining pool according to claim 18, **characterized in that** the feedback information comprises at least one of connection acknowledgment information and a digital certificate generation task, and the diagnosing, based on the feedback information, whether the mining pool is anomalous comprises at least one of the following:
diagnosing, based on the connection acknowledgment information, whether a connection between the mining pool and the apparatus for simulating digital certificate generation is normal; and
diagnosing, based on the digital certificate generation task, whether authentication performed by the mining pool on the apparatus for simulating digital certificate generation is normal.

20. The method for diagnosing a mining pool according to claim 18, **characterized in that** the method further comprises at least one of the following:
diagnosing, based on a work, whether a work algorithm of the mining pool is normal, wherein the work is calculated by the mining pool based on a received random hash value and a computational amount algorithm of a corresponding digital certificate type; and
diagnosing, based on work revenue, whether allocation of the work revenue by the mining pool is correct, wherein the work revenue is allocated by the mining pool based on a work.

21. The method for diagnosing a mining pool according to claim 18, **characterized in that** the method further comprises:
obtaining verification information of the mining pool for the digital certificate generation request information; and
diagnosing, based on the verification information, whether the mining pool is anomalous.

22. The method for diagnosing a mining pool according to claim 21, **characterized in that** the verification information comprises at least one of duplicate verification information for a received random hash value and task difficulty verification information for the random hash value, and the diagnosing, based on the verification information, whether the mining pool is anomalous comprises at least one of the following:
when it is verified that the received random hash value is duplicate, but the random hash value is still used to calculate a work, diagnosing the mining pool as anomalous; or
when it is verified that the received random hash value does not meet a difficulty of a corresponding digital certificate generation task, but the random hash value is still used to calculate a work, diagnosing the mining pool as anomalous.

23. A module for diagnosing a mining pool, **characterized by** comprising:
a first obtaining unit configured to obtain feedback information generated by a mining pool based on digital certificate generation request information, wherein the digital certificate generation request information is sent by an apparatus for simulating digital certificate generation according to any one of claims 7 to 12; and
a first diagnosis unit configured to diagnose, based on the feedback information, whether the mining pool is anomalous.

24. The module for diagnosing a mining pool according to claim 23, **characterized in that** the feedback information comprises at least one of connection acknowledgment information and a digital certificate generation task, and when diagnosing whether the mining pool is anomalous, the first diagnosis unit is configured to perform at least one of the following:
diagnosing, based on the connection acknowledgment information, whether a connection between the mining pool and the apparatus for simulating digital certificate generation is normal; and
diagnosing, based on the digital certificate generation task, whether authentication performed by the mining pool on the apparatus for simulating digital certificate generation is normal.

25. The module for diagnosing a mining pool according to claim 23, **characterized in that** the module further comprises:
a second diagnosis unit configured to diagnose, based on a work, whether a work algorithm of the mining pool is normal, wherein the work is calculated by the mining pool based on a received random hash value and a computational amount algorithm of a corresponding digital certificate type; and
a third diagnosis unit configured to diagnose, based on work revenue, whether allocation of the work revenue by the mining pool is correct, wherein the work revenue is allocated by the mining pool based on a work.

26. The module for diagnosing a mining pool according to claim 23, **characterized in that** the module for diagnosing a mining pool further comprises:
a second obtaining unit configured to obtain verification information of the mining pool for the digital certificate generation request information; and
a fourth diagnosis unit configured to diagnose, based on the verification information, whether the mining pool is anomalous.

27. The module for diagnosing a mining pool according to claim 26, **characterized in that** the verification information comprises at least one of duplicate verification information for a received random hash value and difficulty verification information for the random hash value, and when diagnosing whether the mining pool is anomalous, the fourth diagnosis unit is configured to perform at least one of the following:
when it is verified that the received random hash value is duplicate, but the random hash value is still used to calculate a work, diagnosing the mining pool as anomalous; or
when it is verified that the received random hash value does not meet a difficulty of a corresponding digital certificate generation task, but the random hash value is still used to calculate a work, diagnosing the mining pool as anomalous.

28. A system for diagnosing a mining pool, **characterized by** comprising:
a mining pool;
an apparatus for simulating digital certificate generation according to any one of claims 7 to 12; and
a module for diagnosing a mining pool according to any one of claims 23 to 26.

29. A computer-readable storage medium storing computer-executable instructions, wherein the computer-executable instructions are configured to perform a method for simulating digital certificate generation according to any one of claims 1 to 6, or perform a method for simulating digital certificate generation according to any one of claims 14 to 17, or perform a method for diagnosing a mining pool according to any one of claims 18 to 22.

30. A computer program product, comprising a computer program stored on a computer-readable storage medium, wherein the computer program comprises program instructions, and when executed by a computer, the program instructions cause the computer to perform a method for simulating digital certificate generation according to any one of claims 1 to 6, or cause the computer to perform a method for simulating digital certificate generation according to any one of claims 14 to 17, or cause the computer to perform a method for diagnosing a mining pool according to any one of claims 18 to 22.
